# EUROPEAN PATENT APPLICATION

(11) **EP 0 890 859 A2**
(43) Date of publication of application: **13.01.1999**
(21) Application number: 98202269.1
(22) Date of filing: 07.07.1998
(51) Int. Cl.: G02B 6/44

(54) **Optical fiber assembly**

(30) Priority: 07.07.1997 US 51864 P
(71) Applicant: DSM N.V., 6411 TE Heerlen (NL)
(72) Inventor: Chawla, Chander Prakash, Batavia, IL 60510 (US)

(57) **Abstract**

An optical glass fiber assembly is provided made of a plurality of coated optical glass fibers having at least one coating on the glass fiber and a matrix material which bonds the plurality of coated optical fibers together, wherein the coating on the optical fiber and the matrix material each contain an effective bonding amount of a silane coupling agent.

## Description

### BACKGROUND OF THE INVENTION

### 1. Field of the invention

This invention relates to an optical fiber assembly comprising a plurality of coated optical glass fibers, each having at least one coating and a matrix material which bonds the plurality of coated optical glass fibers together.

### 2. Description of related art

Optical glass fibers are widely used in telecommunication. Generally, the fibers are used in cables. Depending upon the application, each cable can comprise up to one thousand optical fibers. Often, the fibers are arranged in ribbon structures, which are generally flat, strand like structures that generally comprise 4 to 24 fibers. Often, the fibers are colored in order to be able to identify the individual fibers. Thus, in one embodiment, the optical fibers are first individually coated with two coatings; a first soft coating (inner primary) that adheres to the glass fiber, and a hard second (outer primary) coating that covers the soft coating. The fiber is then colored, for example with a UV curable ink with a thickness of about 3-10 µm and, thereafter, the required number of optical fibers are bonded together using a matrix material.

In another embodiment, the outer primary coating comprises a coloring material, and in that case, an additional ink layer is not necessary. Sometimes, single coatings are used (which combine the inner and outer primary coating), in which case generally an additional ink layer is used. The coatings, the optional ink and the matrix material generally are made from UV curable compositions. An optical glass fiber assembly in the form of a ribbon is described in published European patent application No. 194891. In general, a plurality of ribbons are combined together in a cable, as disclosed in U.S. patent No. 4,906,067.

Conventional optical glass fibers are coated, directly after they are drawn, with one or two coating layers. These coating layers are generally formed from organic UV-curable oligomers, reactive diluents, photoinitiators, and additiives. In order to improve adhesion to the glass fiber, the inner primary coating generally comprises a silane coupling agent. The silane coupling agent facilitates bonding of the organic coating material to the glass under wet conditions. These types of inner primary, outer primary and single coatings are described in U.S. patent Nos. 4,849,462, 4,472,019, 4,932,750, 5,146,531 and 5,352,712 which are incorporated herein by reference. However, silane coupling agents are generally not included in formulations unless necessary because they can react with moisture or with other components of the composition, they can slow the cure speed of the composition, and they are relatively expensive.

Silane coupling agents have been used in layers other than the coating layer closest to the glass fiber. Published German patent application 4007519 discloses a UV curable ink containing a silane coupling agent to enhance the hydrophobic character of the pigment. Example 4 of U.S. patent No. 4,472,019, at column 5, lines 5-16, discloses that a silane coupling agent can be used in an outer coating layer as an auxiliary agent, but also teaches that the silane coupling agent is unimportant in the outer coating layer.

Optical fiber assemblies are often used in an environment that adversely affects the quality and integrity of the glass fiber and the coating layers or matrix. For example, moisture can delaminate the ribbon such that the matrix separates from the coating layers of the fibers. Moreover, some countries in Europe require that the optical glass fiber assembly not delaminate after being soaked in hot water at 60°C for 24h. This attack from moisture may lead to attenuation of the signal transmission capability of the coated glass fiber, for example due to microbending caused by delamination of the ribbon matrix. Therefore, further improvement is still needed in optical glass fiber assemblies, to reduce the risk of microbending.

### SUMMARY OF THE INVENTION

An object of the invention is to provide optical glass fiber assemblies having a reduced risk of microbending and an increased resistance to delamination caused by a humid environment.

Another object of the invention is to provide an optical glass fiber assembly having improved resistance to moisture and delamination comprising:
a plurality of coated optical glass fibers having at least one organic coating formed from at least one coating composition cured on each of said glass fibers; and
at least one organic matrix material which serves to bond said plurality of coated optical fibers together, said at least one organic matrix material comprising at least one matrix layer, said at least one matrix layer comprising an innermost matrix layer; and
   wherein said at least one coating layer and said innermost matrix layer each comprise an effective bonding amount of a silane coupling agent, and wherein said silane coupling agent has one of the following formulae:

   X-R¹-Si-(R²)₃ (1);

   X-Si(R²)₃ (2),

   wherein X is a radiation curable group or is a group capable of a coupling reaction with ethylenically unsaturated-groups;
R¹ is a divalent organic group having a molecular weight of about 10,000 or less; and
R² is a hydrolyzable group, selected from the group consisting of alkoxy, alkoxyether, and carboxylic ester, whereby the bonding between said at least one matrix material and said at least one coating is enhanced.

A still further object of the invention is to provide an optical glass fiber assembly having improved resistance to moisture and delamination comprising:
a plurality of coated optical fibers having at least one organic coating layer on each of said optical fibers; and
an organic matrix material which bonds said plurality of coated optical fibers together, said matrix material comprising at least one matrix layer, said at least one matrix layer further comprising an innermost matrix layer, said innermost matrix layer further comprising an effective bonding amount of a silane coupling agent whereby bonding between said innermost matrix layer and said coated optical fiber is enhanced.

Yet another object of the invention is to provide a method for making an optical glass fiber assembly having improved resistance to moisture and delamination comprising:
coating each of a plurality of optical fibers with a first organic coating layer composition comprising a silane coupling agent and curing said coating layer composition to form a coating layer on each of said optical fibers; and
coating said plurality of coated optical fibers with an organic matrix material composition comprising a silane coupling agent and curing said matrix material composition to form a matrix material which bonds said plurality of coated optical fibers together, whereby bonding between said matrix layer and said coated optical fiber is enhanced.

The above objects, and other objects, are now obtained by providing an optical fiber assembly comprising a plurality of optical glass fibers, each coated with at least one coating and a matrix resin material which bonds the plurality of coated optical fibers together, wherein the at least one coating and the matrix resin material each comprise an effective amount of at least one silane coupling agent, whereby the bonding between the matrix and the at least one coating layer is enhanced.

Unexpectedly, it has now been found that the use of the silane coupling agent in both the optical fiber coating layer and the matrix resin improves the interlayer adhesion between the coating layer and the matrix resin material in a humid environment, with enhanced resistance to, particularly, delamination and microbending.

### DETAILED DESCRIPTION OF THE PREFERRED EMBODIMENTS

The optical fiber assembly according to the invention comprises a plurality of optical glass fibers, each coated with at least one coating and a matrix material which bonds the plurality of coated optical fibers together, wherein the at least one coating layer on the glass fiber and the matrix resin material each comprise an effective bonding amount of a silane coupling agent. Preferably, the coating composition and matrix resin composition each comprise at least 0.1 wt.% of a silane coupling agent, more in particular about 0.3 wt.% or more of a silane coupling agent.

Any conventional optical fiber can be used, provided the coating composition used to provide the coating layer contacting the glass fiber contains the required silane coupling agent. Conventional optical glass fibers are coated, directly after they are drawn, with one or two coating layers. These coatings are generally formed from an organic UV-curable material such as (meth)acrylate functional polyurethanes, (meth)acrylate functional polyethers or polyesters, or polysiloxanes, reactive diluents and photoinitiators together with further additives such as stabilizers. The inner primary coating layer generally comprises a silane coupling agent such as:
γ-mercaptopropyltrimethoxysilane,
γ-methacryloxypropyltrimethoxysilane,
vinyltrimethoxysilane, glycidoxytrimethoxysilane, and the like. Examples of inner and outer primary coatings, and single coatings that can be used are disclosed in U.S. patent Nos. 4,849,462, 4,472,019, 4,932,750, 5,146,531 and 5,352,712 which are incorporated herein by reference.

An optical fiber assembly, such as a ribbon, comprises a plurality of optical fibers in which each fiber can be provided with a specific color in order to identify the individual fibers. A fiber can be provided with a color by applying an outer coating that contains a pigment or a dye. Such a coating is, for example, described in the published PCT application WO 90/13579. Alternatively, a UV-curable ink can be used to color the individual fibers. The ink layer can be relatively thin, for example, a thickness less than about 20 µm, preferably less than about 10 µm. The thickness of the ink layer is generally at least about 2 µm. Any of the known UV curable inks can be used. One specific type of UV-curable ink is disclosed in, for example, the published German patent application 4007519.

If more than one coating layer is present on the optical fiber, the outer primary coating preferably contains an effective amount of silane coupling agent.

If an ink layer is present, the ink layer preferably contains an effective amount of silane coupling agent.

An effective amount in the outer primary and/or ink layer generally is about 0.1 wt.% or more, preferably about 0.3 wt.% or more.

The optical fiber assembly can be made by bonding a plurality of coated and optionally colored optical fibers together with a matrix resin material. The matrix material preferably is an organic UV curable composition, preferably comprising acrylate functional oligomers and acrylate functional diluents. The number of optical fibers and their orientation is not limited in the optical fiber assembly. However, the optical fiber generally comprises from 2 to 24 fibers, which are in an adjacent, parallel alignment next to each other in a more or less flat arrangement.

In this manner, a flat ribbon like structure is formed. The fibers in the ribbon may also be stacked 2, 3 or 4 layers thick, with one plane of the ribbon having more aligned fibers than another plane. The matrix resin material that is used to bond the assembly of optical fibers can be one layer. However, it is also possible to use two or more matrix layers, each having different physical properties.

It is preferred that each of the optical fiber coating layers and each of the layers of the matrix material contains a silane coupling agent. More preferably each of the optical fiber coating layers and each of the matrix layers will contains at least 0.1 wt% of a silane coupling agent.

Examples of matrix materials that can be used are disclosed in U.S. patent No. 4,844,604 and published European patent application 407004 which are incorporated herein by reference.

If the silane coupling agent has three hydrolyzable groups, preferably each of the optical fiber inner primary, the outer primary coating layers, the optional ink layer and each of the at least one matrix layer comprises at least 0.02 wt.% Si, wherein the silicon is in the form of a silane coupling agent, and more preferably, at least 0.05 wt.% Si in the form of a coupling agent. Preferably, about 1 wt.% of Si or less in the form of a coupling agent is present in each of the optical fiber coating, ink and matrix layers. If an effective coupling agent such as γ-mercaptopropyltrimethoxysilane is used, the amount of Si in the form of a coupling agent may be about 0.3 wt.% or less. In the existing state of the art, it is common to use relatively low molecular weight compounds which are known as coupling agents for increasing the adhesion between glass-substrates and fiber coatings. It is within the scope of the present invention to also use higher molecular weight compounds, and the term silane coupling agent as used herein contemplates such compounds. These compounds include an oligomer having on one end a silane having hydrolyzable groups, and on another end a group which can copolymerize upon exposure to actinic radiation. Preferably, the silane has three hydrolyzable groups.

The molecular weight of the silane coupling agent is preferably between about 150 and about 6000. The upper end of this range will include oligomeric silane compounds.

For example, if vinyltrimethoxysilane is used, about 0.6 wt.% of coupling agent can be used to provide about 0.1 wt.% of Si in the form of a coupling agent, whereas if an oligomer having a molecular weight of 2000 is used, 8 wt.% of coupling agent would have to be used to provide approximately the same amount of silicon.

Each optical fiber coating layer and each matrix layer may contain a different silane coupling agent or a mixture of silane coupling agents.

The silane coupling agent preferably has one of the following formulae:

X-R¹-Si(R²)₃ (1);

X-Si(R²)₃ (2),

wherein
X is a radiation curable group or is a group capable of a coupling reaction with ethylenically unsaturated-groups;
R¹ is a divalent organic group having a molecular weight less than about 10,000; and
R² is a hydrolyzable group.

Preferably X is acryloxy, methacryloxy, vinyl, mercapto, amino or maleate. The vinyl group may be present as a vinylether, or may be directly attached to the silicon atom.

In one embodiment of the invention, R¹ is a low molecular weight organic group. The molecular weight of R¹ is preferably less than about 250, and more preferably less than about 100. In vinyltrimethoxysilane, the group R¹ is absent. For example, R¹ can be -(CH₂)₂-, -(CH₂)₃-, or another lower divalent alkylgroup and can also comprise ether or amino linkages.

Examples of preferred coupling agents within this first embodiment include:
γ-mercaptopropyltrimethoxysilane,
γ-mercaptopropyltriethoxysilane,
3-methacryloxypropyl-trimethoxysilane,
3-acryloxypropyl-trimethoxysilane,
γ-aminopropyltriethoxysilane,
β-(3,4-epoxycyclohexyl)ethyltrimethoxysilane,
γ-glycidoxy-propyltrimethoxysilane,
3-vinyl-thiopropyltrimethoxy-silane,
vinyltrimethoxysilane,
vinyl-tris-(β-methoxyethoxy)silane,
vinyltriacetoxysilane,
N-β-aminoethyl γ-aminopropyltrimethoxysilane,
N-β-(N-vinylbenzylamino)ethyl-γ-aminopropyltrimethoxysilane,
and mixtures thereof.

In another embodiment of the invention, R¹ may represent an oligomer having a molecular weight of at least about 300. Preferably, the number average molecular weight will be less than about 10,000, more preferably less than about 5000. Examples of preferred coupling agents within this embodiment can be prepared by reacting a polyether diol, with diisocyanate, hydroxyethylacrylate and isocyanatopropyltrimethoxysilane. Another example of this embodiment is the adduct of isocyanatopropyltrimethoxy-silane with hydroxyethylacrylate.

Suitable examples are described in WO-A-96/12749.

Preferably, R² is an organic radical having a hydrolyzable group having a molecular weight of less than about 150. The R² groups can all be the same or different, and preferably are an alkoxy, carboxy or alkoxyether group. More preferably, R² is an alkoxy or alkoxyether group. Preferably, R² has less than 4 carbon atoms. Examples of hydrolyzable groups represented by R² include ethoxy, ethoxy, acetoxy or β-methoxyethoxy.

The optical fiber coating layers and the matrix layers can include photoinitiators and additives as is commonly done in this art.

### Examples

The invention will be further explained by the following non-limiting examples and comparative experiments.

### Examples I-IV and Comparison Experiments A-D

In a set of delamination experiments involving water soaking of optical fiber coating assemblies the effect of the presence 1 wt.% of γ-mercaptopropyltrimethoxysilane was determined. The experiments were conducted using the coating compositions shown in Table 1.

**TABLE 1**

| | Inner primary coating | outer primary coating | ink layer | matrix layer |
|---|---|---|---|---|
| H-(I-PTG-L2000)₂IH | 50 | | | |
| H-I-PEPMANOL HM 10-1733-I-H | | 34.21 | | |
| EBECRYL 4842 | | | 74.5 | |
| H-ADIPRENE-1-21OC-H | | | | 37.85 |
| BISPHENOL ETHOXYLATED DIACRYLATE | | 48.01 | | |
| BISPHENOL A-DIACRYLATE | | | | 28.72 |
| TRIMETHYOL PROPANE TRIACRYLATE | | | 22 | |
| TRIPROPYLENEGLYCOL DIACRYLATE | 3.7 | | | |
| HEXANEDIOL DIACRYLATE | | | | 7.92 |
| 2-HYDROXYETHYL ACRYLATE | | | | 0.77 |
| VINYL CAPROLACTAM | 6 | | | |
| ISOBORNYL ACRYLATE | 10 | | | 9.9 |
| LAURYL ACRYLATE | 7 | | | |
| ETHOXYLATED NONYLPHENOL ACRYLATE | 20.4 | 4.78 | | |
| PHENOXY ETHYL ACRYLATE | | 10.23 | | 10.89 |
| LUCIRIN TPO | 1.6 | | | 1.98 |
| IRAGACURE 184 | | 2.39 | 2 | |
| IRGANOX 245 | | 0.4 | 0.5 | 0.49 |
| IRGANOX 1035 | 0.3 | | | |
| TINUVIN 292 | | | | 0.49 |
| γ-MERCAPTOPROPYL-TRIMETHOXYSILANE | 1 | | | |
| DIETHYLAMINE | 0.1 | | | |
| DC 190 | | | 0.67 | 0.64 |
| DC 57 | | | 0.33 | 0.35 |

1 wt.% of γ-mercaptopropyltrimethoxysilane coupling agent was selectively added to the four layers of the coating assembly shown in Table 1. The presence or absence of a silane coupling agent is summarized in Table 2. The four layers of coating materials were applied consequentively on a glass plate and cured with a Fusion D-bulb (1 J/cm²). The cured 4-layer coating assembly was soaked in water for 24 hr at 60°C and examined visually for delamination.

As evidenced by the results summarized in Table 3, resistance to the delaminating effects of water soaking, indicated by no change (NC) in the laminated coating assembly, is obtained if all layers of the coating assembly include a silane coupling agent. Also, in comparison with experiment A, the presence of a silane coupling agent in the matrix material layer unexpectedly improves the resistance against water soak considerably.

**TABLE 2**

| | I | A | B | II | III | IV | C | D |
|---|---|---|---|---|---|---|---|---|
| Inner (p) | + (^{*}) | + | + | + | + | + | + | + |
| Outer (s) | + | - | + | - | + | - | - | + |
| Ink (i) | + | - | + | + | - | - | + | - |
| Matrix (m) | + | - | - | + | + | + | - | - |

| | | | | | | | | |
|---|---|---|---|---|---|---|---|---|
| ^{*} + = silane present - = no silane | | | | | | | | |

**TABLE 3**

| Hours | I | A | B | II | III | IV | C | D |
|---|---|---|---|---|---|---|---|---|
| 0.25 | ^{*}NC | corners i/s | corners i/m | NC | corners i/s | NC | NC | NC |
| 0.5 | NC | ∼25% i/s | NC | NC | NC | NC | edges i/s | NC |
| 1 | NC | N | NC | NC | NC | NC | NC | NC |
| 2 | NC | ∼25% i/s | ∼25% i/m | NC | ∼10% i/s | NC | ∼10% i/s | NC |
| | | ∼50% i/s | | | | | ∼10% i/s | |
| 4 | NC | ∼25% i/s | NC | NC | ∼10% i/s | NC | ∼10% i/s | corners |
| | | ∼80% i/m | | | edges i/m | | ∼20% i/m | i/m |
| 8 | NC | ∼25% i/s | ∼50% i/m | corners | NC | corners | ∼20% i/s | ∼10% |
| | | ∼90% i/m | | i/m | | i/m | ∼50% i/m | i/m |
| 24 | NC | ∼25% i/s | 100% i/m | ∼50% i/m | ∼10% i/s | 100% i/m | ∼25% | 100% |
| | | 100% i/m | | | 100% i/m | | i/s | i/m |
| | | | | | | | 100% i/m | |

| | | | | | | | | |
|---|---|---|---|---|---|---|---|---|
| * NC indicates no change in lamination condition i/s indicates delamination observed between the ink layer/outer primary coating interface i/m indicates delamination observed between the ink layer/matrix material layer interface | | | | | | | | |

### Examples V and VI and Comparison Experiments E and F

An outer coating composition containing a UV-curable polyurethane polyacrylate with acrylate functional diluents, as described in Table 1., was mixed with 1 wt.% of γ-mercaptopropyltrimethoxy-silane. Two inks were prepared by adding 1 wt.% of the same mercaptosilane to the outer coating composition. Furthermore, two matrix resin compositions were prepared, as described in Table 1, using 1 wt.% of the same mercaptosilane.

The coating, ink and matrix materials were coated and cured in layers, one on top of another, as shown in Table 4. The outer coating was applied on a glass plate to a thickness of about 75 µm and radiation cured using a Fusion D lamp, in a N₂ atmosphere; dosage was 1.0 J/cm². The ink layer was applied in a thickness of 20-25µm, and cured in the same way. Thereafter, the matrix resin material was applied to a thickness of 100 µm and cured in the same way as the ink layer.

**Table 4**

| | V | VI | E | F |
|---|---|---|---|---|
| Outer Layer | with 1% mercaptosilane | with 1% mercaptosilane | coating without silane | coating without silane |
| Ink | LTS-ink with 1% mercaptosilane | UV-curable ink with 1% mercaptosilane | LTS-Ink without silane | UV-curable ink without silane |
| Matrix | with 1% mercaptosilane | with 1% mercaptosilane | without silane | without silane |

The cured films described above were formed on glass microscope slides, and then the slides were soaked in water at a temperature of 40°C for 24 hrs. The slides were examined visually for delamination. Thereafter the slides were dried at 60°C for 45 min. and examined again for delamination.

The results are summarized in Table 5.

**Table 5**

| | V | VI | E | F |
|---|---|---|---|---|
| 24 hr 40°C water soak | no delamination | no delamination | delamination on edges only | increased delamination on edges |
| after water soak then dried 60°C for 45 min | no delamination | no delamination | extensive delamination very apparent | extensive delamination very apparent |
| ^{*} delamination between ink layer and matrix resin layer | | | | |

The test results summarized in Table 5 clearly show if silane is present in the plurality of coating, ink and matrix layers, an improved interlayer adhesion exists. This improved adhesion is demonstrated even after exposure to water or after exposure to water followed by drying. In contrast, the plurality of otherwise identical layers not containing silane demonstrated delamination under the same test conditions.

While the invention has been described in detail and with reference to specific embodiments thereof, it will be apparent to one of ordinary skill in the art that various changes and modifications can be made therein without departing from the spirit and scope thereof.

## Claims

1. An optical glass fiber assembly comprising:
a plurality of coated optical glass fibers having at least one coating formed from at least one coating composition cured on each of said glass fibers; and
at least one matrix material formed of at least one matrix material composition, said at least one matrix material being cured on said at least one coating, said at least one matrix material serving to bond the plurality of coated optical fibers together, wherein each of said at least one coating composition and said at least one matrix material Composition comprise an effective amount of a silane coupling agent, whereby bonding between said at least one matrix material and said at least one coating is enhanced.

2. The optical glass fiber assembly of claim 1, wherein said effective amount of a silane coupling agent is at least 0.1wt.%.

3. An optical glass fiber assembly according to claim 2, wherein said at least one coating comprises an inner primary coating and an outer primary coating in which said inner primary coating adheres to each of said glass fibers and in which said outer primary coating is cured on said inner primary coating.

4. An optical glass fiber assembly according to claim 2, wherein said coated glass fibers further comprises an ink layer formed from a coating composition comprising an ink, said coating composition comprising an ink further comprises at least 0.1 wt.% of a silane coupling agent.

5. An optical glass fiber assembly according to claim 3, wherein said outer primary coating Comprises a coloring material.

6. An optical glass fiber assembly according to claim 3, wherein each of said coated glass fibers further comprises an ink layer formed from a coating composition comprising an ink, said coating composition comprising an ink further comprises at least 0.1 wt.% of a silane coupling agent.

7. An optical glass fiber assembly according to claim 1, wherein said assembly comprises 2 to 24 optical glass fibers.

8. An optical glass fiber assembly comprising:
a plurality of coated optical glass fibers having at least one coating formed from at least one coating composition cured on each of said glass fibers; and
at least one matrix material formed from at least one matrix material composition, said at least one matrix material being cured on the at least one coating, said at least one matrix material serving to bond the plurality of coated optical fibers together, wherein each of said at least one coating composition and said at least one matrix material contain an effective bonding amount of a silane coupling agent, and wherein said silane coupling agent has one of the following formulae:
X-R¹-Si-(R²)₃ (1);
X-Si(R²)₃ (2),
wherein X is a radiation curable group or is a group capable of a coupling reaction with ethylenically unsaturated-groups;
R¹ is a divalent organic group having a molecular weight of about 10,000 or less; and
R² is a hydrolyzable group, selected from the group consisting of alkoxy, alkoxyether, and carboxylic ester, whereby the bonding between said at least one matrix material and said at least one coating is enhanced.

9. An optical glass fiber assembly according to claim 8, wherein X is selected from the group Consisting of mercapto, amino, acryloxy, methacryloxy, vinyl, vinylether, or maleate.

10. An optical glass fiber assembly having improved resistance to moisture and delamination comprising:
a plurality of coated optical fibers having at least one coating layer, said at least one coating layer adhering to each of said optical glass fibers; and
at least one matrix material which serves to bond said plurality of coated optical fibers together, said at least one matrix material comprising at least one matrix layer, said at least one matrix layer comprising an innermost matrix layer; and wherein said at least one coating layer and said innermost matrix layer each comprise an effective bonding amount of a silane coupling agent, whereby bonding between said innermost matrix layer and said coating layer is enhanced.
